Europäisches Patentamt

European Patent Office

Office européen des brevets

(11) Publication number: **0 123 371**
**B1**

(12) EUROPEAN PATENT SPECIFICATION

(45) Date of publication of patent specification: **07.09.88**

(51) Int. Cl.⁴: **G 06 F 13/14, H 04 L 11/16**

(21) Application number: **84300451.6**

(22) Date of filing: **25.01.84**

(54) Multi-processor system.

(30) Priority: **27.01.83 GB 8302319**

(43) Date of publication of application:
**31.10.84 Bulletin 84/44**

(45) Publication of the grant of the patent:
**07.09.88 Bulletin 88/36**

(84) Designated Contracting States:
**BE CH DE FR GB IT LI NL SE**

(56) References cited:
**DE-A-2 259 223**
**DE-A-2 442 736**
**FR-A-2 319 165**
**GB-A-2 006 491**

**PATENT ABSTRACTS OF JAPAN, vol. 6, no. 87,
25th May 1982, page 49 E 108 & JP-A-5721140
(RICOH K.K.) 03-02-1982**

(73) Proprietor: **BRITISH TELECOMMUNICATIONS
PUBLIC LIMITED COMPANY
81 Newgate Street
London EC1A 7AJ (GB)**

(72) Inventor: **Allwood, Anthony Robert
29 Warren Hill Road
Woodbridge Suffolk, IP12 4DU (GB)**

(74) Representative: **Semos, Robert Ernest Vickers
et al
BRITISH TELECOM Intellectual Property Unit
13th Floor 151 Gower Street
London WC1E 6BA (GB)**

(56) References cited:
**IMPEMENTING FUNCTIONS: microprocessors
and firmware, 7th EUROMICRO SYMPOSIUM
ON MICROPROCESSING AND
MICROPROGRAMMING, 8th-10th September
1981, Paris, pages 393-397, North-Holland
Publishing Company, Amsterdam , NL P.
MOLLER-NIELSEN et al.: "A multi-processor for
multi-program experiments"**

Courier Press, Leamington Spa, England.

# Description

The invention relates to processor systems in which there are several interacting processor stations and information is passed from one station to another.

There are several well known processor systems which allow information to be passed from one station in the system to another. These known systems include (1) ring structures in which stations are all connected to a common information bus in the form of a ring and (2) a structure in which there is a common information bus which is not in the form of a closed ring but allows bi-directional transfer of information.

Such systems, in which several stations have access to a common bus, give rise to the problem of non-collision. This is the problem of ensuring that information is put on and retrieved from the bus in an ordered manner so that one station does not, in trying to interact with the bus, corrupt information already on the bus.

There are several known protocols which so order the bus interaction to allow one station to put information on the bus to be read off the bus by another. In these known protocols the stations may be run synchronously or asynchronously, that is, the timing of the start of the instruction cycles in each station may be coincident (synchronous) or may not be coincident (asynchronous).

Another problem with such multi-station systems is to ensure that the station which is to receive the information actually receives it. In a synchronous system this can be done by timing and arranging for (a) each station to read the bus at a particular time and (b) the information on the bus at that time to be the information for that reading station (i.e. another station is transmitting synchronously for the receiving station). This can be done, for example, by a controlling processor instructing the relevant stations at the relevant times to read or write as required; or by each station program requiring reading or writing at relevant times. This latter solution may involve each station reading an address from a packet of information and only reading the rest of the information if the address coincides with the reader's address and similarly only writing information into a free packet slot (eg this could be signalled by the absence of an address at the beginning of a package slot). In asynchronous or synchronous arrangements the above can be achieved by arranging for the transmitting station to send an interrupt to the intended recipient which then stops what it is doing and reads the information. In an asynchronous system the interrupt may also be used to bring the intended recipient into phase with the transmitting station.

Thus synchronous systems require the provision of an extra controlling processor or a reading stage in each station program. The asynchronous system requires an interrupt protocol.

German Patent No. 2259223 discloses an example of a synchronous system in which each of a number of stations connected to a bus is allocated a respective time slot in a frame for transmitting information onto the bus. However, the stations count time slot pulses applied to the bus by a pulse generator, are grouped in pairs with the two stations of a pair of allocated time slots spaced by half the frame duration and each station is arranged to read only the transmission from its paired station.

An asynchronous system is known from French Patent No. 2319165 where a plurality of transmitting stations (fire alarms) are connected to a power line (bus), and a master control requires to receive information from them. The master control applies a trigger signal (by open-circuiting the power line) which causes a first analogue timer in each station to begin timing a respective period at the end of which a second timer causes a load resistor to be coupled across the power line for a duration proportional to the sensed temperature.

Depending on the function the system is to perform there may be advantages in adopting asynchronous or synchronous schemes.

According to the present invention there is provided a multiprocessor system comprising a common communication means interconnecting a plurality of data processor stations having respective designation codes characterised in that: the common communication means comprises a common information bus (7) and a common control bus (3, 4); the data processor stations have respective unique designation codes and normally work asynchronously; there is provided a master data processor station (6) adapted to perform software timing calculations and interconnected via said information bus (7) with the plurality of data processor stations (5) and trigger generation means to put a trigger signal on the control bus (3, 4) to initiate a data communication cycle comprising write and read phases, said stations (5) being adapted to perform respective software timing calculations related to their unique codes following the triggering, wherein in the write phase said plurality of stations (5) write any information for the master station (6) onto the bus in respective time intervals defined by the respective software timing calculations, and in the read phase said master station (6) writes information onto the bus (7) to be read by individual members of said plurality of stations after respective time intervals.

Preferably the timing calculations comprise a series of program steps all occupying the same interval, the number of steps carried out by each said processor during the phases of the cycle being related to its unique code.

More preferably, the data processor stations (5) are in the form of substantially identical cards (10) and the unique codes are station addresses determined by the wiring (8) of the back plane slots (9) in which the cards are mounted.

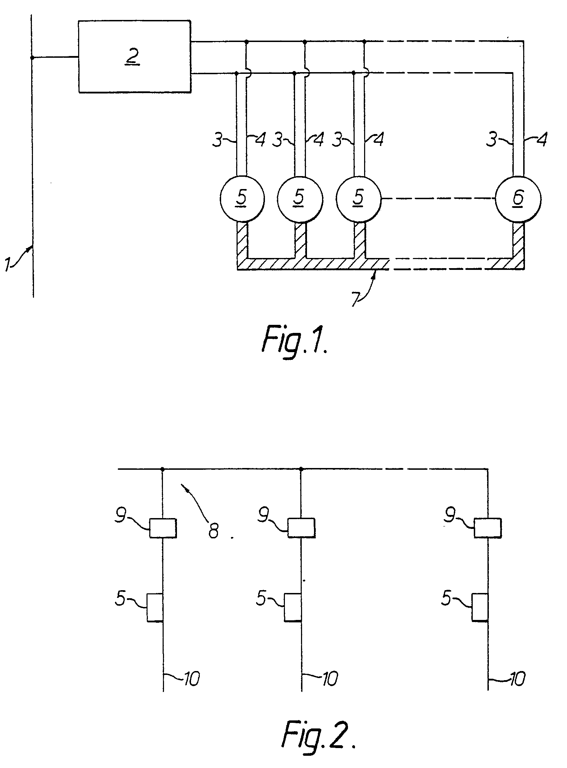

An embodiment of this invention will now be described by way of example only, with reference to the accompanying drawing in which Figure 1 is a block diagram of a processor system according to the invention, and Figure 2 is a schematic diagram of part of the card and back plane arrangement.

In this embodiment the invention is employed in a PBX (Private Branch Exchange) which provides, inter alia, for several extensions (for telephones and/or other equipment, e.g. computer terminals) and for several exchange lines (connections from the PBX to the outside world, e.g. the local exchange of the public switched telephone network). The PBX therefore has at least to provide connections through itself to connect: (1) a calling extension to the called extension; (2) a calling extension to the exchange line.and to pass on to the outside world the desired number; and (3) an exchange line to the called extension for incoming calls.

The PBX described here is a digitally operated PBX in which analogue signals are sampled and encoded in digital form using well-known techniques.

The PBX comprises a control shelf (which, inter alia, controls the switching through the PBX and houses the time switch), and a line shelf (which houses line units which group together the line circuits to the extension lines and the exchange lines). The line shelf also has a shelf interface unit (SIU) which interfaces between the line shelf and the control shelf.

As shown in Figure 1 each line unit contains a micro-computer 5 which functions as a common control for the line circuits in the unit (not shown). The SIU, which performs the overall control function for the shelf, also contains a micro-computer 6 for control purposes.

Communication between the SIU and the line units is effected over an 8 wire shelf signalling bus 7, used at different times in each direction. Communication between the SIU and the control shelf is effected over a communication link (not shown).

The control shelf controls the time switch, arranges correct connection and generally processes the calls.

The invention is employed in the communication between the line units and the SIU. The system operates on an 8 msec cycle. All the line unit microcomputers 5 and the SIU microcomputer 6 (herein referred to as stations) receive an interrupt signal from the control shelf (via the interrupt signal line 1) every 8 msec. Each microcomputer (5, 6) on receipt of the interrupt signal ceases its processing, performs an alignment to synchronise the microcomputers (5, 6) on the line shelf and then commences the following sequence:— msecs 0 and 1: line unit microcomputers 5 transmit data and SIU microcomputer 6 reads the transmitted data. msecs 2 and 3: SIU microcomputer 6 transmits data and line unit microcomputers 5 read the data.

In msecs 4 to 7 all microcomputers (5, 6) return to their own asynchronous internal functions and no information is passed along the bus 7.

The synchronisation may be performed by simply completing the operation the microcomputer is carrying out at the time of receipt of the interrupt. However, some microcomputers, e.g. an Intel 8049 microcomputer, have operations which may involve either one or two instruction cycles. Thus synchronisation by completion of an operation only synchronises the microcomputers to within two instruction cycles. In such a case each byte of information put on the bus must be on the bus for at least two instruction cycles to ensure that it is read by the required station. This therefore can slow the operation of the system.

In this embodiment the interrupt line 1 feeds an interrupt logic block 2 which is on the same card as the SIU microcomputer 6. The interrupt logic block 2 passes the interrupt signal undelayed to the microcomputers (5, 6) along microcomputer interrupt line 3 and generates a second synchronisation pulse, delayed from the interrupt pulse, which is fed to the microcomputers along both the microcomputer interrupt leads 3 and microcomputer synchronisation lines 4. On receipt of the first pulse the microcomputers (5, 6) in the line units and in the SIU complete whatever activities they are engaged on at the time it arrives, and then wait for the second pulse on the microcomputer interrupt line 3. When the second pulse arrives, and provided it is accompanied by a pulse on the microcomputer synchronisation line 4, all microcomputers (5, 6) commence the 8 msec cycle (described above) synchronised to within one instruction cycle. This synchronisation is achieved by causing the microcomputers to wait by repetitively executing the single instruction cycle operation of "no operation". The requirement to recognise pulses on both the microcomputer interrupt lines 3 and the microcomputer synchronisation lines 4 at the same time provides a means of distinguishing between first and second interrupts.

After receipt of the second of the double interrupt signals, each line unit microcomputer 5 executes R "do loops" where R is the unique symbolic address of the particular line unit microcomputer. The "do loop" of each microcomputer comprises a series of "no operation" program steps such that one "do loop" operation occupies the same time that is required for the line unit microcomputer 5 to transmit its information onto the bus 7. Thus the information from all line units appears on the bus in a train and the SIU microcomputer 6 reading the information on the bus 7 can identify which line unit microcomputer put which information on the bus 7.

Upon completion of transmission of its information each line unit microcomputer 5 reads information from the bus 7 after a period defined by M "do loop" operations where M+1 is at least the number of line unit microcomputers 5 in the system.

The SIU microcomputer 6 reads the information put on the bus 7 by the line unit microcomputers 5 and knows which information was put on the bus 7 by which line unit microcomputer from the time lapse from the second interrupt signal.

After receipt of information from all line unit microcomputers 5, the SIU microcomputer 6 puts information on the bus 7 intended for the line unit microcomputers 5. Each line unit microcomputer 5 reads the information on the bus 7 after waiting a specified period (as explained above) from the completion of the transmission of information onto the bus 7 by that microcomputer. Thus each microcomputer 5 reads the information intended for it.

After the SIU microcomputer 6 has read all the information from the line unit microcomputers 5 and each line unit microcomputer 5 has read the information intended for it from the SIU microcomputer 6 all of the microcomputers return to their internal functions until receipt of the interrupt as described above.

As the line unit microcomputers 5 each have a unique symbolic address in the range 0 to N-1, where N is the number of line unit microcomputers 5 in the system, the information from the line unit microcomputers is transmitted in a queued manner onto the information bus.

The line unit microcomputers 5 can be identical and can operate using identical software. The symbolic address in this case is obtained from the physical position a particular microprocessor 5 has with respect to the other microcomputers 5. The microcomputers 5 are informed of this position by the wiring 8 of the back plane slots 9 in which the microcomputer cards 10 are located (Figure 2).

The embodiment so far described by way of example allows a microcomputer to receive information from a number of microcomputers in a first phase, to transmit information to each of these microcomputers in a second phase and in a third phase to allow all microcomputers to asynchronously continue with their internal processes. The microcomputers communicate by a parallel bus and are brought into synchronism using an externally generated interrupt. However, the principle of receipt of an interrupt and timing transmission and reading of information by execution of a software program, in order to achieve non-collision of access to the bus, can be applied to ring buses as well as to bi-directional buses. Also the principle can be applied to the case when the interrupt is not generated externally to the system, but may be generated by any of the communication microcomputers and may be applied to only two or more of the microcomputers.

In this latter case, all microcomputers other than those actually communicating must be inhibited from attempting to initiate communication. This can be achieved by, for example, an initiating microcomputer inhibiting all other microcomputers from initiation of communication for the period required for the communication required by the initiating microcomputer. This period could, for example, be fixed in the design stage of the system, or could be variable, in which case the initiating microcomputer would have to inform the non-communicating microcomputers how long the communication will take, and require them to wait at least that time, before initiating a communication request.

In the embodiment described, the packages of information for each line unit microcomputer 5 have the same duration. However, the principle above may be applied to systems in which the microcomputers do not have information packages of the same length, provided the transmitting and the reading microcomputers know the length of the packages and therefore can, by timing, ensure non-collision, infer (from the time when the information was read) the address of the transmitting microcomputer and time when to read information intended for it.

Furthermore, in a modification of such a system the information packages, whether all the same length or not, can be varied dynamically by the microcomputers, but in this case the microcomputers will have to inform each other about the lengths of their packages, and the microcomputers may have special inputs for this purpose. All the microcomputers will have a normal respective package length (also referred to as transmission period), and can indicate any deviation from this, and each microcomputer will be responsive to the indicated deviations for two purposes. The first purpose is to adjust the start of transmission in accordance with the net deviation of the preceding microcomputer (i.e. those with lower codes), and the second purpose is to adjust the start of reading in accordance with the net deviation of all the microcomputers. In this way, the system can make efficient use of communication time with the transmissions following one after the other.

If a microcomputer has no information to transmit then it can indicate a deviation of the total length of its normal information package. Alternatively, the system may be arranged such that a microcomputer having no information to transmit can provide a signal to the other microcomputers to alter their unique codes, thus indicating the deviation by a unity-value signal rather than a high-value signal.

The microcomputers begin the read phase having taken into account the net deviation in the transmit phase, and the same idea of dynamic length adjustment can be applied with the transmitting microcomputer indicating any deviation of the package length.

The embodiment has been employed to provide concentration within the PBX. This has been achieved by the line shelf having ports for up to 96 line circuits, the line circuits being grouped together such that 8 are served by one line unit microcomputer, and the resultant 12 line unit microcomputers interface with a 32 channel communication link with the control shelf. Thus at any one time only 32 of the 96 line circuits may be used. The SIU microcomputer receives information from the line unit microcomputers and allocates the line circuits to the control shelf allowing two-way communication on each of the 32 channels in the communication link.

For an incoming call the control shelf initiates action by the SIU microcomputer for establishing two-way communication.

## Claims

1. A multiprocessor system comprising a common communication means interconnecting a plurality of data processor stations having respective designation codes characterised in that: the common communication means comprises a common information bus (7) and a common control bus (3, 4); the data processor stations have respective unique designation codes and normally work asynchronously; there is provided a master data processor station (6) adapted to perform software timing calculations and interconnected via said information bus (7) with the plurality of data processor stations (5) and trigger generation means (2) to put a trigger signal on the control bus (3, 4) to initiate a data communication cycle comprising write and read phases, said stations (5) being adapted to perform respective software timing calculations related to their unique codes following the triggering, wherein in the write phase said plurality of stations (5) write any information for the master station (6) onto the bus in respective time intervals defined by the respective software timing calculations, and in the read phase said master station (6) writes information onto the bus (7) to be read by individual members of said plurality of stations after respective time intervals.

2. A multiprocessor system as claimed in claim 1, characterised in that said timing calculations comprise a series of program steps all occupying the same time interval, the number of steps carried out by each said processor during the phases of the cycle being related to its unique code.

3. A multiprocessor system as claimed in claim 1 or claim 2, characterised in that said data processor stations comprise microcomputers.

4. A multiprocessor system as claimed in any of the preceding claims, characterised in that the data processor stations (5) are in the form of substantially identical cards (10) and the unique codes are station addresses determined by the wiring (8) of the back plane slots (9) in which the cards are mounted.

## Patentansprüche

1. Multiprozessorsystem mit einer gemeinsamen Übermittlungseinrichtung, welche eine Vielzahl von Prozessor- oder Datenverarbeitungsstationen mit entsprechenden Bezeichnungskodes miteinander verbindet, dadurch gekennzeichnet, daß die gemeinsame Übermittlungseinrichtung einen gemeinsamen Informationsbus (7) und einen gemeinsamen Steuerbus (3, 4) umfaßt; die Datenverarbeitungsstationen jeweils einen Eigenbezeichnungskode haben und normalerweise asynchron arbeiten; eine Leitdatenverarbeitungsstation (6) vorgesehen ist, welche Softwarezeitgabeberechnungen ausführt und über den Informationsbus (7) mit einer Vielzahl von Datenverarbeitungsstationen (5) und Triggersignalerzeugungseinrichtungen verbunden ist, um ein Triggersignal zur Auslösung eines Datenübertragungszyklus auf den Steuerbus (3, 4) zu geben, welcher Lese- und Schreibphasen umfaßt, wobei die Stationen (5) entsprechende Softwarezeitgabeberechnungen nach dem Triggern durchführen, die sich auf ihren Eigenkode beziehen, und daß in der Schreibphase die Vielzahl der Stationen (5) jede beliebige für die Leitstation (6) bestimmte Information in entsprechenden Zeitintervallen in den Bus schreiben, welche durch die entsprechenden Softwarezeitgabeberechnungen definiert sind, und daß die Leitstationen (6) in der Lesephase Informationen in den Bus (7) schreiben, welche von einzelnen Mitgliedern der Vielzahl von Stationen nach entsprechenden Zeitabständen gelesen werden.

2. Multiprozessorsystem nach Anspruch 1, dadurch gekennzeichnet, daß die Zeitgabeberechnungen eine Reihe von Programmschritten umfassen, die alle das gleiche Zeitintervall besetzen, wobei die Zahl der von jedem Prozessor während der Phasen des Zyklus ausgeführten Schritte auf seinen Eigenkode bezogen ist.

3. Multiprozessorsystem nach Anspruch 1 oder 2, dadurch gekennzeichnet, daß die Datenverarbeitungsstationen Mikrocomputer aufweisen.

4. Multiprozessorsystem nach einem beliebigen der vorhergehenden Ansprüche, dadurch gekennzeichnet, daß die Datenverarbeitungsstation (5) die Form von im wesentlichen identischen Karten (10) haben und die Eigenkodes Stationsadressen sind, welche durch die Verdrahtung (8) der Rückwandschlitze (9) bestimmt werden, in welchem die Karten angebracht sind.

## Revendications

1. Un système à processeurs multiples comprenant un moyen commun de communication assurant l'interconnexion d'une pluralité de stations de traitement de données ayant des codes de désignation respectifs, caractérisé en ce que: le moyen commun de communication comprend un bus commun d'information (7) et un bus commun de commande (3, 4); les stations de traitement de données comportent des codes de désignation uniques respectifs et opèrent normalement de façon asynchrone; il est prévu une station principale de traitement de données (6) adaptée pour effectuer des calculs logiciels de temps et interconnectée par l'intermédiaire dudit bus d'information (7) avec la pluralité de stations de traitement de données (5) et un moyen de génération de déclenchement pour appliquer un signal de déclenchement au bus de commande (3, 4) afin d'amorcer un cycle de communication de données comprenant des phases d'écriture et de lecture, lesdites stations (5) étant adaptées pour effectuer des calculs logiciels de temps respectifs en relation avec leurs codes uniques à la suite du déclenchement, en ce que, dans la phase d'écriture, ladite pluralité de stations (5) écrivent une information destinée à la station principale (6) dans le bus à des intervalles de temps respectifs qui sont définis par les calculs logiciels de temps respectifs, et, dans la phase de lecture, ladite station principale (6) écrit une information dans le bus (7) en vue de sa lecture par des éléments individuels de ladite pluralité de stations au bout d'intervalles de temps respectifs.

2. Un système à processeurs multiples tel que revendiqué dans la revendication 1, caractérisé en ce que lesdits calculs de temps comprennent une série d'étapes de programme occupant toutes le même intervalle de temps, le nombre d'étapes effectuées par certains desdits processeurs pendant les phases du cycle étant en relation avec son code unique.

3. Un système à processeurs multiples tel que revendiqué dans la revendication 1 ou la revendication 2, caractérisé en ce que lesdites stations de traitement de données comprennent des micro-ordinateurs.

4. Un système à processeurs multiples tel que revendiqué dans une quelconque des revendications précédentes, caractérisé en ce que les stations de traitement de données (5) se présentent sous la forme de cartes (10) sensiblement identiques et les codes uniques sont des adresses de stations déterminées par le câblage (8) des encoches (9) de plans arrière, dans lesquelles les cartes sont montées.

0 123 371

Fig.1.

Fig.2.